# EUROPEAN PATENT SPECIFICATION

(11) **EP 2 260 696 B1**
(45) Date of publication and mention of the grant of the patent: **01.01.2014**
(21) Application number: 10165688.2
(22) Date of filing: 11.06.2010
(51) Int. Cl.: A01K 1/015

(54) **Floor for a stable or an exit space**
Bodenabdeckung eines Stalls oder eines Stallausgangraums
Plancher pour étable ou sortie d'étable

(30) Priority: 11.06.2009 NL 1037035
(43) Date of publication of application: 15.12.2010
(73) Proprietor: ID Agro B.V., 8152 DG Lemelerveld (NL); Courage, Stichting Innovatie Rundveehouderij, 2719 EK Zoetermeer (NL); Pape, Johannes F. M., 7156 SK Beltrum (NL)
(72) Inventor: Pape, Johannes Franciscus Maria, 7156 SK, Beltrum (NL)
(74) Representative: Mink-Lindenburg, Charlotte Hildegard

(56) References cited:
- DE-U- 7 531 642
- FR-A- 2 786 210
- NL-C- 1 033 217

## Description

The invention relates to a floor for a stable or an exit space for livestock, comprising a profile floor on which is arranged a moisture-permeable drain bed provided with a moisture-permeable cover layer. Such a floor is known from for instance NL9200455. The object of the known floor is to separate waste produced by animals present in the stable into a liquid fraction, which seeps through the moisture-permeable cover layer, and a more or less solid fraction which can be easily removed using a scraper.

DE-U-7531642 discloses a stable floor according to the preamble of claim 1.

According to the invention, the present floor has the features as defined in claim 1. The present invention has for its object to improve the welfare of animals by providing them with a floor on which they can walk properly and on which they can moreover rest comfortably. The welfare of the animals is of objective importance, since healthy animals are generally more productive than less healthy animals.

The moisture-permeable, resilient layer comprises holed mats made from rubber or from plastic. The holed mats must then be relatively fine-meshed so that the hooves of the animals present in the stable are adequately supported and the load of the moisture-permeable cover layer does not become too great locally.

An advantageous alternative embodiment has the feature that the resilient layer comprises granules made from rubber and/or from plastic and/or from stone. The floor comprises a moisture-permeable sliding layer arranged between the moisture-permeable cover layer and the resilient layer. The advantage is that the moisture-permeable cover layer can now move freely without co-displacing the mats and/or granules lying thereunder.

A further very advantageous embodiment has the feature that the drain bed arranged under the resilient layer comprises objects with an open structure, such as granules of lava gravel or small open plastic objects. Such a drain bed has a very large internal surface, on which surface a bacteria culture can develop which can convert urea and ammonia present in the liquid fraction to nitrates and nitrites. The drain bed preferably also comprises organic material, such as peat moss, which can hold the liquid fraction fast for a time. The drain bed preferably further has a thickness of at least fifteen centimetres, whereby the liquid fraction is present for a sufficiently long time in the drain bed to convert a significant part of the urea and ammonia present.

The emission of ammonia gas is further reduced in that bacteria and enzymes present in the thick fraction substantially do not come into contact with the liquid fraction so that urinase is prevented as far as possible. The different layers of the floor moreover ensure that ammonia gas possibly released later substantially cannot enter the outside air, and a significant part thereof is converted to nitrates and nitrites as it passes through the floor.

A further advantageous embodiment has the feature that the floor comprises a stabilizing layer arranged between the resilient layer and the drain bed, for instance in the form of 'Schwabengitter' as known in the field, so that the relatively loose drain bed cannot shift, for instance in the case of wheel load.

A further embodiment which is easy to realize has the feature that the profile floor comprises a system of elevations and recesses dug into the ground and provided with a moisture-impermeable cover layer made of rubber or plastic, as well as drainage tubes arranged in the recesses on this cover layer. The other layers can be arranged successively on the moisture-impermeable cover layer.

The invention will now be further elucidated with reference to the following figures, wherein:
- Fig.: 1Ashows a schematic cross-sectional view of a first possible embodiment of a floor according to the invention;

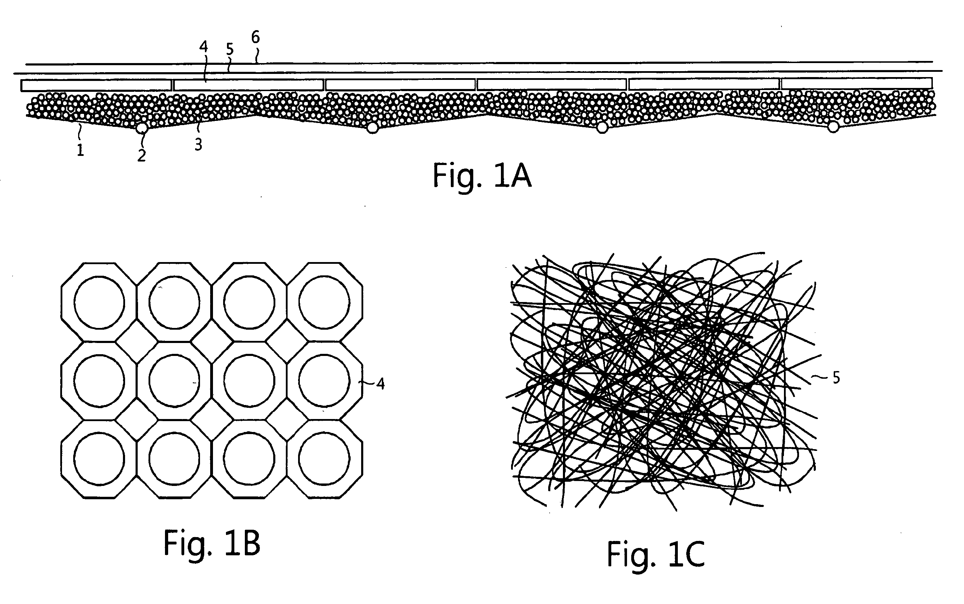

- Fig. 1: B shows schematically a possible embodiment of a resilient holed mat;
- Fig.: 1Cshows a possible embodiment of a moisture-permeable sliding layer;
- Fig.: 2Ashows a schematic cross-sectional view of a second possible embodiment of a floor according to the invention;
- Fig.: 2Bshows schematically a possible embodiment of a stabilizing layer;
- Fig.: 3Ashows a schematic cross-sectional view of a third possible embodiment of a floor according to the invention;
- Fig.: 3Bshows a schematic cross-sectional view of a fourth possible embodiment of a floor according to the invention.

Fig. 1A shows a schematic cross-sectional view of a first possible embodiment of a floor according to the invention. A pattern is dug into the ground such that a system of elevations and recesses results, which is covered with a plastic foil 1, after which drainage tubes 2 are arranged. A drain bed 3 consisting of for instance gravel is then arranged. Rubber mats 4 are placed thereon which enhance the comfort for the livestock. A moisture-permeable sliding layer 5 is then arranged, and finally arranged is a moisture-permeable cover layer 6 made from strong woven plastic fibres. Fig. 1B shows schematically a possible embodiment of a resilient rubber holed mat 4. Holed mat 4 is generally known and is frequently applied as floor covering and as for instance doormat. It is important that the holes are small compared to the hooves of the livestock walking on the floor. Fig. 1C shows a possible embodiment of a moisture-permeable sliding layer 5. The moisture-permeable sliding layer 5 consists for instance of a non-woven layer manufactured from a smooth plastic, for instance PVC, and ensures that cover layer 6 can slide easily when loaded so as to reduce the chance of tearing.

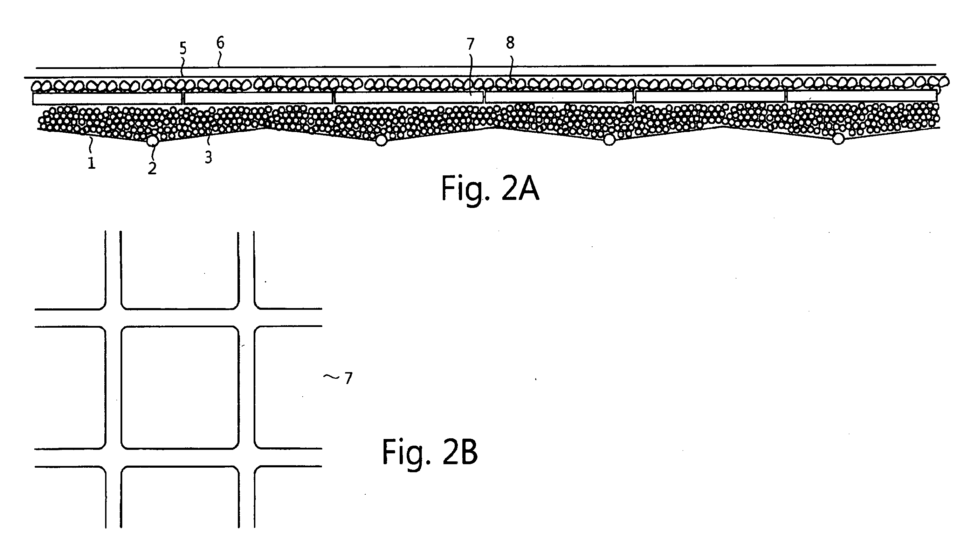

Fig. 2A shows a schematic cross-sectional view of a second possible embodiment of a floor according to the invention. A pattern is dug into the ground such that a system of elevations and recesses results, which is covered with a plastic foil 1, after which drainage tubes 2 are arranged. A drain bed 3 consisting of for instance gravel is then arranged. Arranged hereon is a stabilizing layer 7 having thereon a comfort layer 8 consisting of rubber granules or a mixture of rubber granules and stone granules. A moisture-permeable sliding layer 5 is then arranged, and finally arranged is a moisture-permeable cover layer 6 made from strong woven plastic fibres Fig. 2B shows schematically a possible embodiment of a stabilizing layer 7. This is for instance a wide-mesh mat of hard plastic known under the name 'Schwabengitter'.

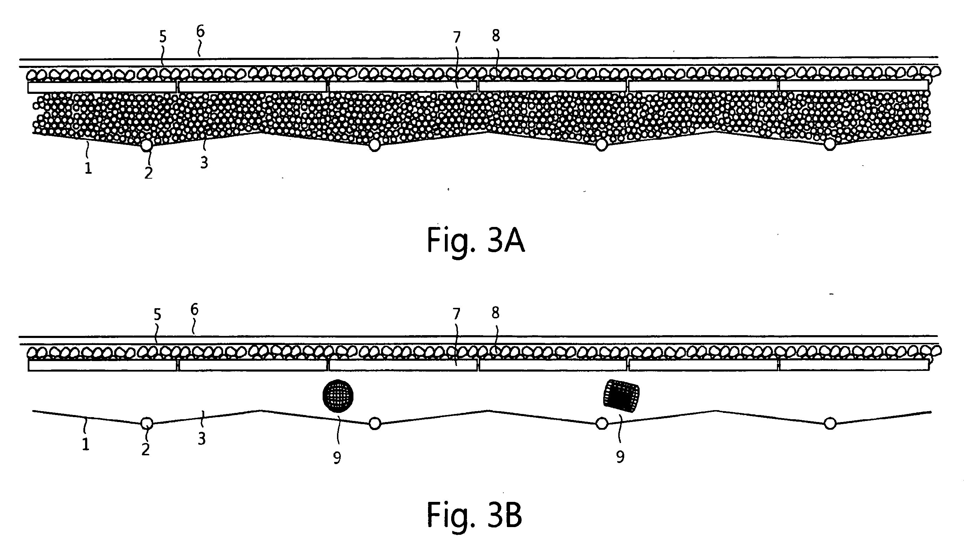

Fig. 3A shows a schematic cross-sectional view of a third possible embodiment of a floor according to the invention. The floor corresponds to the floor shown in Fig. 2A, but drain bed 3 is realized here with objects having an open structure, for instance moisture-permeable granules of lava gravel. Drain bed 3 further has a great thickness of for instance fifty centimetres, whereby the liquid passing through remains for a relatively long time in drain bed 3. This time can be extended by incorporating in drain bed 3 organic material such as peat moss which can hold the passing liquid fast for a time. After a time a biologically active layer forms in and on the moisture-permeable granules. The result is that a significant part of the urea and ammonia present in the passing liquid is converted to nitrates and nitrites, so that the liquid seeping from drainage tubes 2 can advantageously be used to fertilize agricultural land.

Fig. 3B shows a schematic cross-sectional view of a fourth possible embodiment of a floor according to the invention. The floor corresponds to the floor shown in Fig. 2A, but drain bed 3 is realized here with small, open plastic objects 9 with a large surface area. Drain bed 3 further has a great thickness of for instance fifty centimetres, whereby the liquid passing through remains for a relatively long time in drain bed 3. The residence time can be extended by incorporating in drain bed 3 organic material such as peat moss which can hold the passing liquid fast for a time. After a time a biologically active layer forms on the surface of plastic objects 9. The result is that a significant part of the urea and ammonia present in the passing liquid is converted to nitrates and nitrites, so that the liquid seeping from drainage tubes 2 can advantageously be used to fertilize agricultural land. The advantage is that the plastic objects generally do not become clogged, even when relatively large quantities of biomass are deposited due to the bacterial action.

## Claims

1. Floor for a stable or an exit space for livestock, comprising a profile floor on which is arranged a moisture-permeable drain bed (3) provided with a moisture-permeable cover layer (6), wherein the floor comprises a moisture-permeable, resilient layer (4;8) situated under the moisture-permeable cover layer, wherein the moisture-permeable, resilient layer (4) comprises holed mats made from rubber or from plastic or the resilient layer (8) comprises granules made from rubber and/or from plastic and/or from stone, **characterized in that** the floor comprises a moisture-permeable sliding layer (5) arranged between the moisture-permeable cover layer (6) and the resilient layer (4;8).

2. Floor as claimed in claim 1, **characterized in that** the drain bed (3) arranged under the resilient layer comprises objects with an open structure, such as granules of lava gravel or small open plastic objects.

3. Floor as claimed in claim 2, **characterized in that** the drain bed (3) also comprises organic material.

4. Floor as claimed in any of the foregoing claims, **characterized in that** the drain bed (3) has a thickness of at least fifteen centimetres.

5. Floor as claimed in claim 1, **characterized in that** the floor comprises a stabilizing layer (7) arranged between the resilient layer (8) and the drain bed (3).

6. Floor as claimed in any of the foregoing claims, **characterized in that** the profile floor comprises a system of elevations and recesses dug into the ground and provided with a moisture-impermeable cover layer made of rubber or of plastic, as well as drainage tubes (2) arranged in the recesses on this cover layer.

## Patentansprüche

1. Boden für einen Stall oder einen Auslaufbereich für Vieh, umfassend einen profilierten Boden, auf dem ein flüssigkeitsdurchlässiges Drainagebett (3) angeordnet ist, das mit einer flüssigkeitsdurchlässigen Deckschicht (6) versehen ist, wobei der Boden eine flüssigkeitsdurchlässige elastische Schicht (4; 8) umfasst, die unter der flüssigkeitsdurchlässigen Deckschicht angeordnet ist, wobei die elastische Schicht (4) mit Löchern versehene Matten aus Gummi oder aus Kunststoff oder Granulat, das aus Gummi und/oder aus Kunststoff und/oder aus Stein besteht, umfasst, **dadurch gekennzeichnet, dass** der Boden eine flüssigkeitsdurchlässige Gleitschicht (5) umfasst, die zwischen der flüssigkeitsdurchlässigen Deckschicht (6) und der elastischen Schicht (4; 8) angeordnet ist.

2. Boden gemäß Anspruch 1, **dadurch gekennzeichnet, dass** das unter der elastischen Schicht angeordnete Drainagebett (3) Gegenstände mit einer offenen Struktur, wie Lavagranulat oder kleine Kunststoffgegenstände umfasst.

3. Boden gemäß Anspruch 2, **dadurch gekennzeichnet, dass** das Drainagebett (3) auch organisches Material umfasst.

4. Boden gemäß einem der vorhergehenden Ansprüche, **dadurch gekennzeichnet, dass** das Drainagebett (3) eine Dicke von mindestens fünfzehn Zentimetern aufweist.

5. Boden gemäß Anspruch 1, **dadurch gekennzeichnet, dass** der Boden eine Stabilisierungsschicht (7) aufweist, die zwischen der elastischen Schicht (8) und dem Drainagebett (3) angeordnet ist.

6. Boden gemäß einem der vorhergehenden Ansprüche, **dadurch gekennzeichnet, dass** der profilierte Boden ein System von Vorsprüngen und Rücksprüngen aufweist, die in den Boden eingebracht sind und mit einer flüssigkeitsundurchlässigen Deckschicht aus Gummi oder Kunststoff versehen ist und Drainageröhren (2) in den Rücksprüngen der Deckschicht aufweist.

## Revendications

1. Plancher pour une étable ou un espace de sortie pour du bétail, comprenant un plancher profilé sur lequel est disposé un lit de drainage perméable à l'humidité (3) muni d'une couche de couverture perméable à l'humidité (6), le plancher comprenant une couche élastique perméable à l'humidité (4 ; 8) située en dessous de la couche de couverture perméable à l'humidité, la couche élastique perméable à l'humidité (4) comprenant des tapis percés en caoutchouc ou en matière plastique ou la couche élastique (8) comprend des granulés en caoutchouc et/ou en matière plastique et/ou en pierre, **caractérisé en ce que** le plancher comprend une couche glissante perméable à l'humidité (5) disposée entre la couche de couverture perméable à l'humidité (6) et la couche élastique (4 ; 8).

2. Plancher selon la revendication 1, **caractérisé en ce que** le lit de drainage (3) disposé en dessous de la couche élastique comprend des objets ayant une structure ouverte, tels que des granulés de graviers de lave ou des petits objets en matière plastique ouverts.

3. Plancher selon la revendication 2, **caractérisé en ce que** le lit de drainage (3) comprend en outre un matériau organique.

4. Plancher selon l'une des revendications précédentes, **caractérisé en ce que** le lit de drainage (3) a une épaisseur d'au moins quinze centimètres.

5. Plancher selon la revendication 1, **caractérisé en ce que** le plancher comprend une couche de stabilisation (7) disposée entre la couche élastique (8) et le lit de drainage (3).

6. Plancher selon l'une des revendications précédentes, **caractérisé en ce que** le plancher profilé comprend un système d'élévations et de retraits réalisés dans le fond et munis d'une couche de couverture imperméable à l'humidité réalisée en caoutchouc ou en matière plastique, ainsi que des tubes de drainage (2) disposés dans les retraits sur cette couche de couverture.
